# EUROPÄISCHE PATENTSCHRIFT

(11) **EP 1 027 782 B1**
(45) Veröffentlichungstag und Bekanntmachung des Hinweises auf die Patenterteilung: **22.12.2004**
(21) Anmeldenummer: 98959714.1
(22) Anmeldetag: 06.10.1998
(51) Int. Cl.: H04J 13/02, H04B 7/26

(54) **TELEKOMMUNIKATIONSSYSTEM ZUR DRAHTLOSEN TELEKOMMUNIKATION MIT EINER CDMA-, FDMA- UND TDMA-VIELFACHZUGRIFFSKOMPONENTE**
TELECOMMUNICATION SYSTEM FOR WIRELESS TELECOMMUNICATION WITH A CDMA, FDMA AND TDMA MULTIPLE ACCESS COMPONENT
SYSTEME DE TELECOMMUNICATION POUR LA TELECOMMUNICATION SANS FIL AVEC UN COMPOSANT A ACCES MULTIPLES AMCR, AMRF ET AMRT

(30) Priorität: 27.10.1997 DE 19747370
(43) Veröffentlichungstag der Anmeldung: 16.08.2000
(73) Patentinhaber: SIEMENS AKTIENGESELLSCHAFT, 80333 München (DE)
(72) Erfinder: KLEIN, Anja, D-10709 Berlin (DE); NASSHAN, Markus, D-46395 Bocholt (DE)
(86) Internationale Anmeldenummer: PCT/DE1998/002959
(87) Internationale Veröffentlichungsnummer: WO 1999/022474

(56) Entgegenhaltungen:
- OJANPER ET AL: "FRAMES-hybrid multiple access technology" IEEE ISSSTA. IEEE INTERNATIONAL SYMPOSIUM ON SPREAD SPECTRUM TECHNIQUES AND APPLICATIONS, Nr. 1, 22. September 1996, Seite 320 320 XP002077020
- JUNG P ET AL: "KONZEPT EINES CDMA-MOBILFUNKSYSTEMS MIT GEMEINSAMER DETEKTION FUER DIE DRITTE MOBILFUNKGENERATION, TEIL 2" NACHRICHTENTECHNIK ELEKTRONIK, Bd. 45, Nr. 2, März 1995, Seiten 24-27, XP000499065

## Beschreibung

In Nachrichtensystemen mit einer Nachrichtenübertragungsstrecke zwischen einer Nachrichtenquelle und einer Nachrichtensenke werden zur Nachrichtenverarbeitung und -übertragung Sende- und Empfangsgeräte (Sender und Empfänger) verwendet, bei denen
1) die Nachrichtenverarbeitung und Nachrichtenübertragung in einer bevorzugten Übertragungsrichtung (Simplex-Betrieb) oder in beiden Übertragungsrichtungen (Duplex-Betrieb) erfolgen kann,
2) die Nachrichtenverarbeitung analog oder digital ist,
3) die Nachrichtenübertragung über die Fernübertragungsstrekke drahtgebunden ist oder auf der Basis von diversen Nachrichtenübertragungsverfahren FDMA (Frequency Division Multiple Access), TDMA (Time Division Multiple Access) und/oder CDMA (Code Division Multiple Access) - z.B. nach Funkstandards wie DECT, GSM, WACS oder PACS, IS-54,- IS-95, PHS, PDC etc. [vgl. IEEE Communications Magazine, January 1995, Seiten 50 bis 57; D.D. Falconer et al: "Time Division Multiple Access Methods for Wireless Personal Communications"] drahtlos (z.B. durch Funkübertragung) erfolgt.

"Nachricht" ist ein übergeordneter Begriff, der sowohl für den Sinngehalt (Information) als auch für die physikalische Repräsentation (Signal) steht. Trotz des gleichen Sinngehaltes einer Nachricht - also gleicher Information - können unterschiedliche Signalformen auftreten. So kann z. B. eine einen Gegenstand betreffende Nachricht
(1) in Form eines Bildes,
(2) als gesprochenes Wort,
(3) als geschriebenes Wort,
(4) als verschlüsseltes Wort oder Bild
übertragen werden. Die Übertragungsart gemäß (1) ... (3) ist dabei normalerweise durch kontinuierliche (analoge) Signale charakterisiert, während bei der Übertragungsart gemäß (4) gewöhnlich diskontinuierliche Signale (z. B. Impulse, digitale Signale) entstehen.

Ausgehend von dieser allgemeinen Definition eines Nachrichtensystems bezieht sich die Erfindung auf ein Verfahren zur drahtlosen Telekommunikation, insbesondere mit einer CDMA-, FDMA- und TDMA-Vielfachzugriffskomponente, gemäß dem Oberbegriff des Patentanspruches 1.

Verfahren zur drahtlosen Telekommunikation finden Anwendung in Telekommunikationssystemen, wie sie in den Druckschriften **(1)** : *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration";* **(2)** *: Nachrichtentechnik Elektronik, Berlin 41, 1991, Heft 6, Seiten 223 bis 227 und Seite 234; P.W.Baier, P. Jung, A.Klein: "CDMA - ein günstiges Vielfachzugriffsverfahren für frequenzselek*tive *und zeitvariante Mobilfunkkanäle*"; **(3)** *: IEICE Transactions on Fundamentals of Electonics, Communications and Computer Sciences, Vol. E79-A, No. 12*, *December 1996, Seiten 1930 bis 1937; P.W.Baier, P. Jung: "CDMA Myths and Realities Revisited";* **(4)***: IEEE Personal Communications, February 1995, Seiten 38 bis 47; A.Urie, M.Streeton, C.Mourot : "An Advanced TDMA Mobile Access System for UMTS";* **(5)** *: telekom praxis, 5*/*1995, seiten 9 bis 14; P.W.Baier: "Spread-Spectrum-Technik und CDMA - eine ursprünglich militärische Technik erobert den zivilen Bereich";* **(6):** *IEEE Personal Communications, February 1995, Seiten 48 bis 53; P.G.Andermo, L.M.Ewerbring: "An CDMA-Based Radio Access Design for UMTS";* **(7)** *: ITG Fachberichte 124 (1993*), *Berlin*, *Offenbach: VDE Verlag ISBN 3-8007-1965-7, Seiten 67 bis 75; Dr. T.Zimmermann, Siemens AG: "Anwendung von CDMA in der Mobilkommunikation";* **(8)** *: telcom report 16,* *(1993), Heft 1, Seiten 38 bis 42; Dr. T. Ketseoglou, Siemens AG und Dr.*

*T. Zimmermann*, *Siemens AG: "Effizienter Teilnehmerzugriff für die 3. Generation der Mobilkommunikation - Vielfachzugriffsverfahren CDMA macht Luftschnittstelle flexibler*" dargestellt und beschrieben sind, werden mit Ausblick auf ein Universelles Mobiles Telekommunikations-System (UMTS) als das zukünftige Funk-Telekommunikationsszenario der dritten Generation bezeichnet.

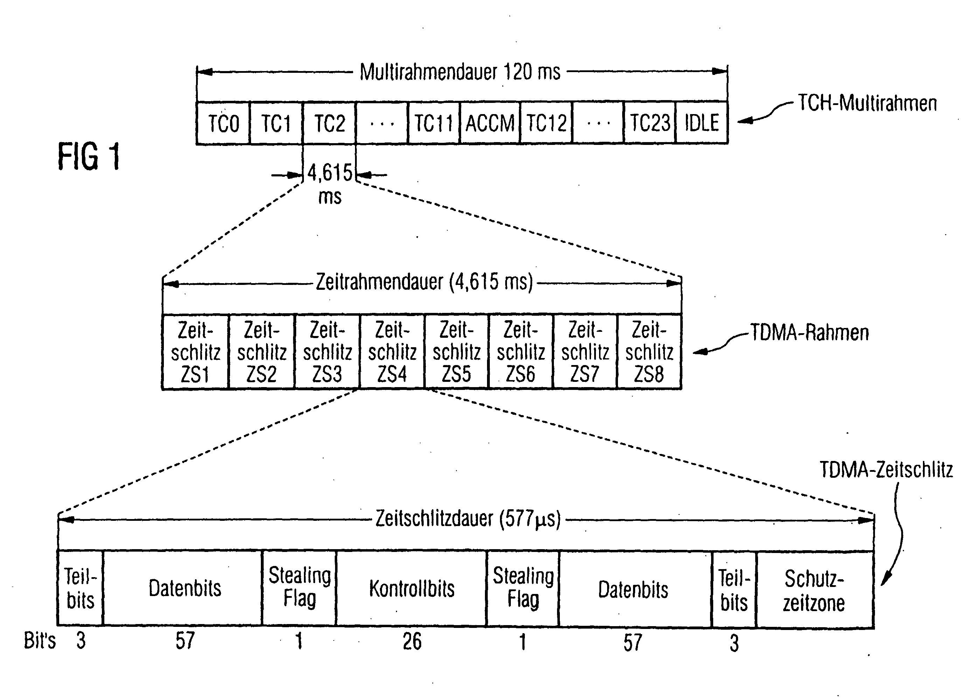

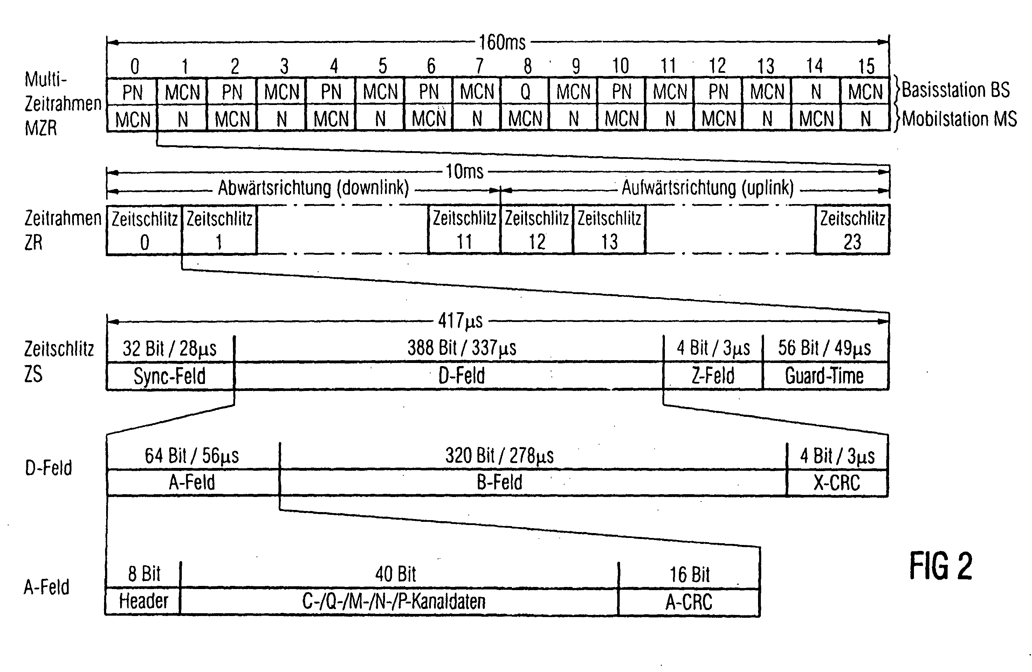

Das Funk-Telekommunikationsszenario der zweiten Generation werden zur Zeit im Mikro- bzw. Makrozellenbereich vom auf dem FDMA/TDMA/FDD-Übertragungsprinzip (Frequency Division Duplex) basierenden GSM-spezifischen Funk-Telekommunikationssystem [Groupe Spéciale Mobile oder Global System for Mobile Communication; vgl. **(1)**: Informatik Spektrum 14 (1991) Juni, Nr. 3, Berlin, DE; A.Mann:"Der GSM-Standard - Grundlage für digitale europäische Mobilfunknetze", Seiten 137 bis 152; **(2)**: R.Steele: Mobile Radio Communications, Pentech Press, 1992 (Reprint 1994) , Chapter 8: The Pan-European Digital Cellular Mobile Radio System - known as GSM, Seiten 677 ff.; **(3)**: telekom praxis 4/1993, P. Smolka: "GSM-Funkschnittstelle - Elemente und Funktionen", Seiten 17 und 24] und im Pikozellenbereich vom auf dem FDMA/TDMA/TDD-Übertragungsprinzip (Time Division Duplex) basierenden DECT-Telekommunikationssystem [Digital Enhanced (früher: European) Cordless Telecommunication; vgl. **(1)**: Nachrichtentechnik Elektronik 42 (1992) Jan./Feb. Nr. 1, Berlin, DE; U. Pilger "Struktur des DECT-Standards", Seiten 23 bis 29 in Verbindung mit der ETSI-Publikation ETS 300175-1...9, Oktober 1992; **(2):** telcom report 16 (1993), Nr. 1, J. H. Koch: "Digitaler Komfort für schnurlose Telekommunikation - DECT-Standard eröffnet neue Nutzungsgebiete", Seiten 26 und 27; **(3):** tec 2/93 - Das technische Magazin von Ascom "Wege zur universellen mobilen Telekommunikation", Seiten 35 bis 42; **(4):** Philips Telecommunication Review Vol. 49, No. 3, Sept. 1991, R.J. Mulder:" DECT, a universal cordless access system"; **(5)**: WO 93/21719 (FIG 1 bis 3 mit dazugehöriger Beschreibung)] bestimmt.

FIGUR 1 zeigt die für die Nutzdatenübertragung auf dem Verkehrskanal (Traffic CHannel TCH) aus den Druckschriften "**(*1*)** : *Informatik* Spektrum *14 (1991) Juni, Nr.* 3, Berlin, *DE; A. Mann : "Der GSM-Standard - Grundlage für digitale europäische Mobilfunknetze*", *Seiten 137 bis 152; **(2)**: R.Steele: Mobile Radio Communications, Pentech Press, 1992 (Reprint 1994), Chapter 8: The Pan-European Digital Cellular Mobile Radio System - known as GSM, Seiten 677 ff.;* **(3):** telekom praxis 4/1993, P. Smolka: "GSM-Funkschnittstelle - Elemente und Funktionen", Seiten 17 und 24" bekannte TCH-Multirahmen-, TDMA-Rahmen- und TDMA-Zeitschlitz-Struktur des GSM-Mobilfunkkonzeptes, bei dem die in der dargestellten Struktur mit einer Zeitschlitzdauer von 577 µs eingebetteten Daten gemäß dem FDD-Prinzip in der Aufwärtsstrecke bzw. Aufwärtsrichtung (uplink; Übertragung "Mobilstation → Basisstation") im Frequenzband zwischen 890 MHz und 915 MHz und in der Abwärtsstrecke bzw. Abwärtsrichtung (downlink; Übertragung "Basisstation → Mobilstation") im Frequenzband zwischen 935 MHz und 960 MHz übertragen werden.

FIGUR 2 zeigt die aus der Druckschrift "Nachrichtentechnik Elektronik 42 (1992) Jan./Feb. Nr. 1, Berlin, DE; U. Pilger "Struktur des DECT-Standards", Seiten 23 bis 29" bekannte Multirahmen-, TDMA-Rahmen- und TDMA-Zeitschlitz-Struktur des DECT-Mobilfunkkonzeptes, bei dem die in der dargestellten Struktur eingebetteten Daten gemäß dem TDD-Prinzip in der Abwärtsstrecke bzw. Abwärtsrichtung (downlink; Übertragung "Basisstation → Mobilstation") in den Zeitschlitzen 0...11 und in der Aufwärtsstrecke bzw. Aufwärtsrichtung (uplink; Übertragung "Mobilstation → Basisstation") in den Zeitschlitzen 12...23 übertragen werden.

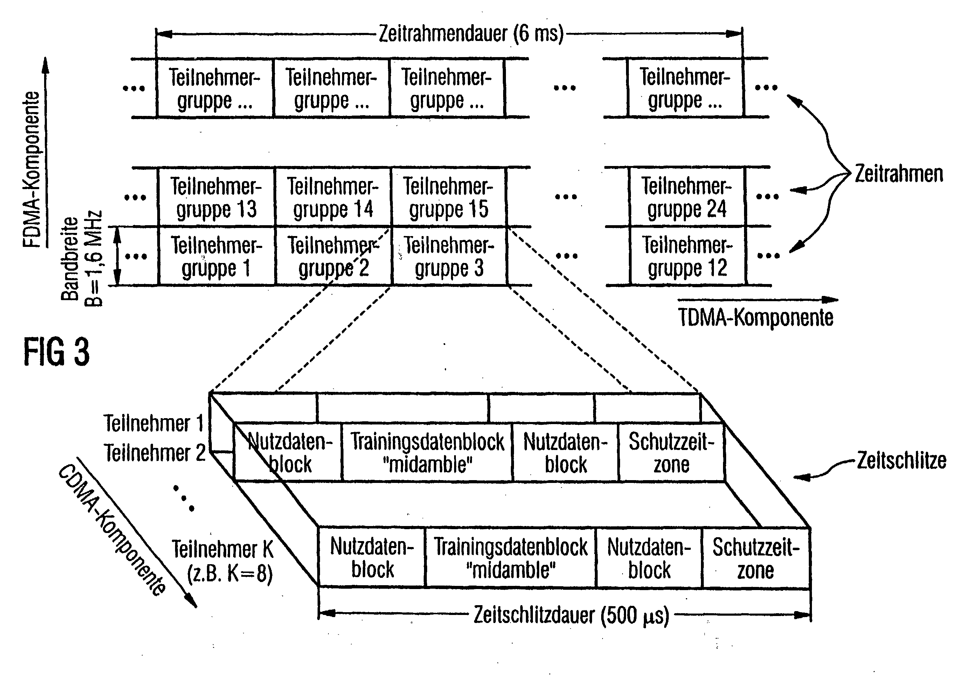

FIGUR 3 zeigt ausgehend von der Druckschrift *Nachrichtentechnik Elektronik, Berlin 45, 1995, Heft 1, Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration"* einen möglichen FDMA/TDMA/CDMA-Vielfachzugriff für die Aufwärtsstrecke (uplink; Ubertragungsrichtung "Mobilstation → Basisstation") und Abwärtsstrecke (uplink; Übertragungsrichtung "Mobilstation --> Basisstation") eines Telekommunikationssystems mit CDMA-,FDMAund TDMA-Vielfachzugriffskomponenten, z.B. eines Joint Detection-CDMA-Mobilfunkkonzeptes, bei dem - wie bei dem GSM-System (vgl. FIGUR 1) - die Daten gemäß dem FDD-Prinzip in der Aufwärtsstrecke bzw. Aufwärtsrichtung (uplink; Übertragung "Mobilstation → Basisstation") und in der Abwärtsstrekke bzw. Abwärtsrichtung (downlink; Übertragung "Basisstation → Mobilstation") in unterschiedlichen Frequenzbändern übertragen werden.

Die Anzahl der in einem Zeitschlitz gleichzeitig aktiven Teilnehmer ist z.B. K=8.

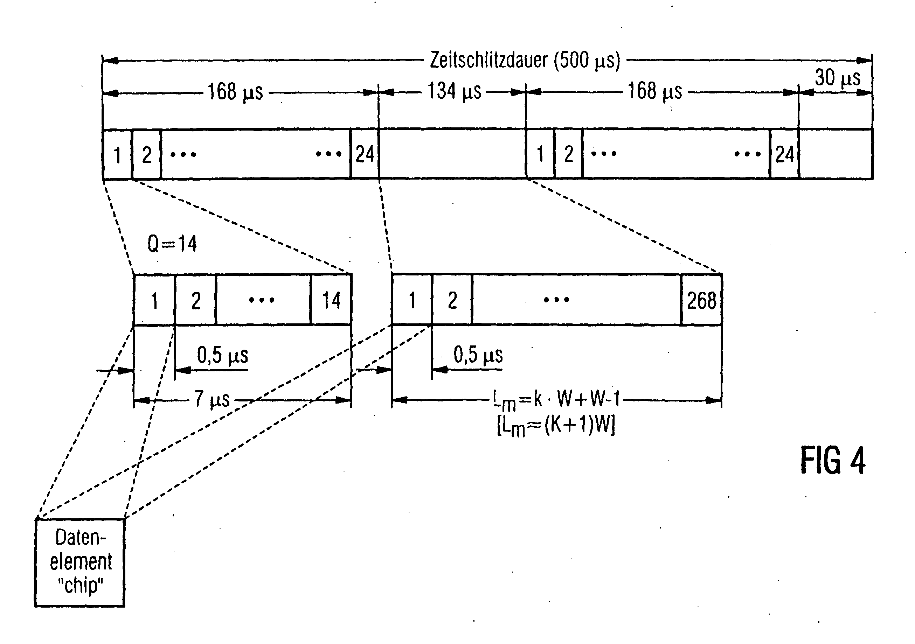

FIGUR 4 zeigt ausgehend von der Darstellung des Vielfachzugriffs in FIGUR 3 die aus der Druckschrift *Nachrichtentechnik Elektronik, Berlin 45, 1995, Heft 1*, *Seiten 10 bis 14 und Heft 2, Seiten 24 bis 27; P.Jung, B.Steiner: "Konzept eines CDMA-Mobilfunksystems mit gemeinsamer Detektion für die dritte Mobilfunkgeneration*" bekannte, insbesondere in Bild 5 der Druckschrift dargestellte Zeitschlitzstruktur (Burststruktur) der Aufwärtsstrecke (up link; Übertragungsrichtung "Mobilteil → Basisstation") des Joint Detection-CDMA-Mobilfunkkonzeptes.

Die in FIGUR 4 angegebenen 24 Datensymbole der Nutzdatenblökke werden mit einem teilnehmerspezifischen Spreizcode mit einem Spreizfaktor von Q=14 gespreizt, so daß jedes Datensymbol 14 als "chip" ausgebildete Datenelemente enthält.

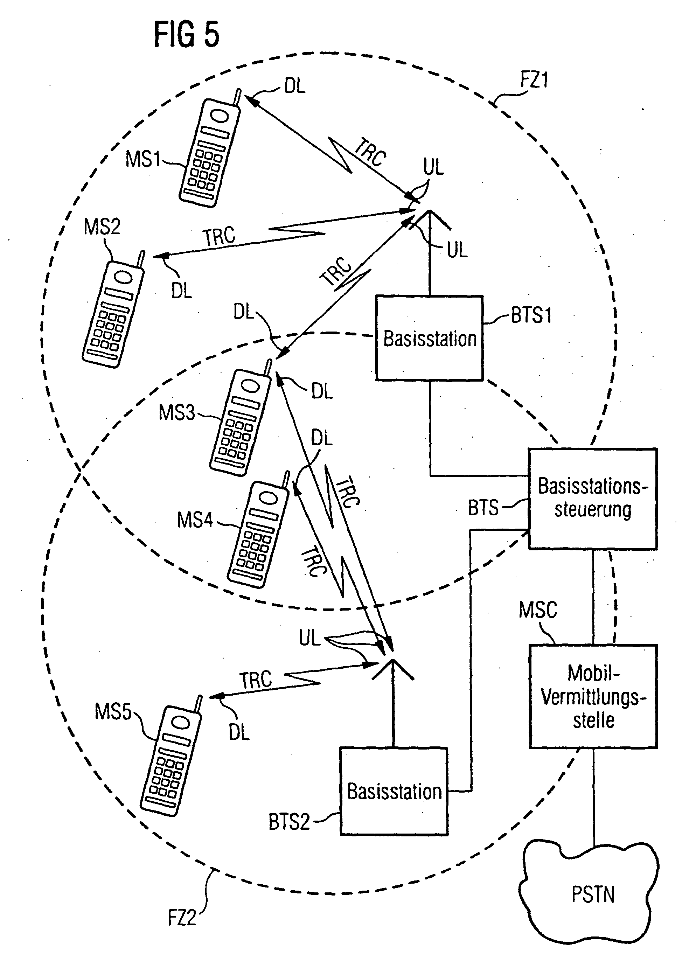

FIGUR 5 zeigt auf der Basis eines GSM-Funkszenarios mit z.B. zwei Funkzellen und darin angeordneten Basisstationen (Base Transceiver Station), wobei eine erste Basisstation BTS1 (Sender/Empfänger) eine erste Funkzelle FZ1 und eine zweite Basisstation BTS2 (Sender/Empfänger) eine zweite Funkzelle FZ2 omnidirektional "ausleuchtet", ein FDMA/TDMA/CDMA-Funkszenario, bei dem die Basisstationen BTS1, BTS2 über eine für das FDMA/TDMA/CDMA-Funkszenario ausgelegte Luftschnittstelle mit mehreren in den Funkzellen FZ1, FZ2 befindlichen Mobilstationen MS1...MS5 (Sender/Empfänger) durch drahtlose uni- oder bidirektionale - Aufwärtsrichtung UL (Up Link) und/oder Abwärtsrichtung DL (Down Link) - Telekommunikation auf entsprechende Übertragungkanäle TRC (Transmission Channel) verbunden bzw. verbindbar sind. Die Basisstationen BTS1, BTS2 sind in bekannter Weise (vgl. GSM-Telekommunikationssystem) mit einer Basisstationssteuerung BSC (BaseStation Controller) verbunden, die im Rahmen der Steuerung der Basisstationen die Frequenzverwaltung und Vermittlungsfunktionen übernimmt. Die Basisstationssteuerung BSC ist ihrereseits über eine Mobil-Vermittlungsstelle MSC (Mobile Switching Center) mit dem übergeordneten Telekommunikationsnetz, z.B. dem PSTN (Public Switched Telecommunication Network), verbunden. Die Mobil-Vermittlungsstelle MSC ist die Verwaltungszentrale für das dargestellte Telekommunikationssystem. Sie übernimmt die komplette Anrufverwaltung und mit angegliederten Registern (nicht dargestellt) die Authentisierung der Telekommunikationsteilnehmer sowie die Ortsüberwachnung im Netzwerk.

Die Datenrate, die mit einer Mobilstation übertragbar ist, kann gemäß der Druckschrift *"Nachrichtentechnik Elektronik, Berlin 45*, *1995*, *Heft 1*, *Seiten 10 bis 14 und Heft 2, Seiten 24 bis 27, vgl.: insbesondere Heft 2, Seite 26, linke Spalte, Zeilen 4 bis 8; P.Jung, B.Steiner: "Konzept eines CDMA-Mobilfunksystems mit gemeinsamer Detektion für die dritte Mo*bilfunkgeneration" dadurch variiert werden, daß diesem Teilnehmer mehrere Zeitschlitze ("Multi-slot"-Option) und/oder mehrere CDMA-Codes ("Multi-code"-Option) zugewiesen werden.

Die "Multi-slot"-Option und "Multi-code"-Option haben aus der Sicht der Mobilstation folgende Eigenschaften:
"Multi-slot"-Option (jeweils maximal 1 CDMA-Code pro Zeitschlitz wird einem Teilnehmer zugeteilt):

### Mobilstation als Sender:

- Es sind geringere Anforderungen an die Linearität des HF-Teils, da das Sendesignal eine nahezu konstante Einhüllende hat.
- Bei ansteigender Anzahl der zugeteilten Zeitschlitze geht man immer mehr zu einem kontinuierlichen Sendebetrieb über. Sind der Mobilstation z.B. alle acht Zeitschlitze eines TDMA-Rahmens zugeordnet, so hat man exakt den Fall des kontinuierlichen Sendebetriebs. Dieser Fall ist aus EMV-Hinsicht günstig.

### Mobilstation als Empfänger:

- Alle Zeitschlitze müssen detektiert werden, in denen die Mobilstation einen CDMA-Code zugeteilt bekommen hat. Nachteilig dabei ist, daß ein Overhead an Signalverarbeitung in folgender Hinsicht entsteht: Ist der Mobilstation aus z.B. acht "aktiven" CDMA-Codes nur ein einziger CDMA-Code zugeteilt, werden, z.B. beim "Joint Detection"-Prozeß, trotzdem acht detektiert. Die Daten der sieben nicht zugeteilten Codes werden nicht weiterverarbeitet.

**"Multi-code"-Option** (pro Zeitschlitz werden einem Teilnehmer mehr als ein CDMA Code zugeteilt):

### Mobilstation als Sender:

- Es sind hohe Anforderung an das HF-Teil zu stellen, da das Sendesignal keine konstante Einhüllende hat.

### Mobilstation als Empfänger:

- Im Empfänger entsteht ein geringer Overhead an Signalverarbeitung. Im Fall, daß der Mobilstation alle aktiven CDMA-Codes eines Zeitschlitzes zugeordnet sind, entsteht überhaupt kein Overhead.

Die der Erfindung zugrundeliegende Aufgabe besteht darin, die vorstehend diskutierten Nachteile beim Variieren der z.B. mit Mobilstationen in Telekommunikationssystemen zur drahtlosen Telekommunikation, insbesondere mit einer CDMA-, FDMA- und TDMA-Vielfachzugriffskomponente, übertragbaren Datenraten zu vermeiden.

Diese Aufgabe wird ausgehend von dem im Oberbegriff des Patentanspruches 1 definierten Verfahrens zur drahtlosen Telekommunikation durch die im Kennzeichen des Patentanspruches 1 angegebenen Merkmale gelöst.

Die der Erfindung zugrundeliegende Idee besteht darin, die "Multi-code"-Option im Downlink (Übertragungsrichtung: "Basisstation → Mobilstation") und die "Multi-slot"-Option im Uplink (Übertragungsrichtung: "Mobilstation → Basisstation") einzusetzen, wobei dem Telekommunikationsteilnehmer im Downlink (Abwärtsverbindung) pro Zeitschlitz mehr als ein CDMA-Code zugeteilt wird und im Uplink (Aufwärtsverbindung) jeweils maximal 1 CDMA-Code pro Zeitschlitz zugeteilt wird.

Weitere vorteilhafte Weiterbildungen sind in den Unteransprüchen angegeben.

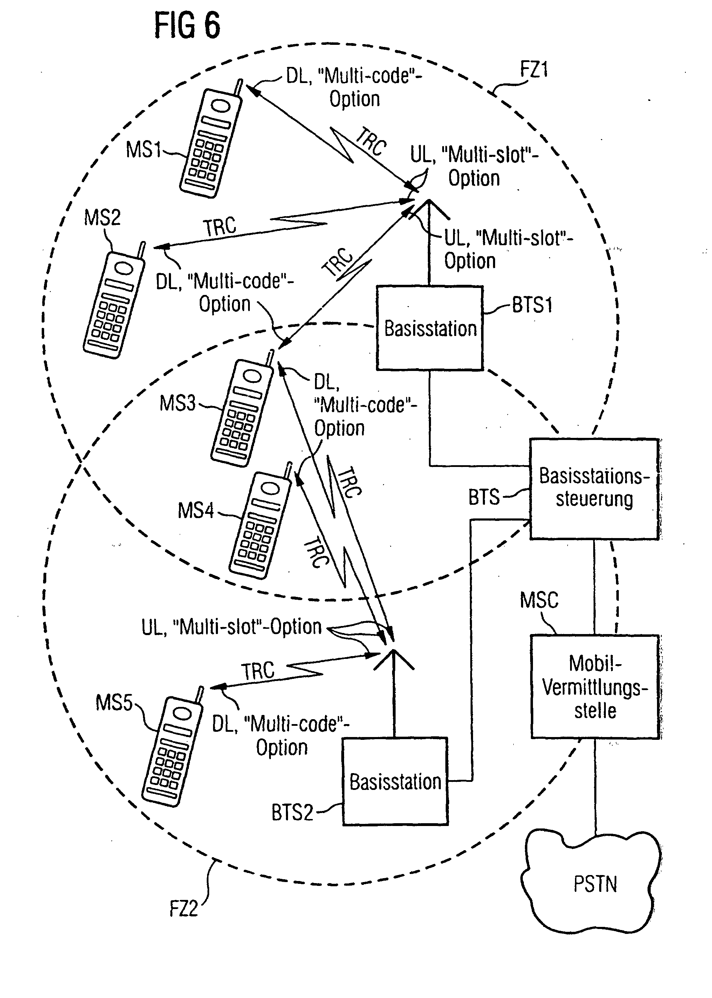

Ein Ausführungsbeispiel der Erfindung wird anhand der FIGUR 6 erläutert.

FIGUR 6 zeigt ausgehend von FIGUR 5 ein modifiziertes FDMA/TDMA/CDMA-Funkszenario, bei dem in der Abwärtsstrecke (downlink) "Basisstation BTS1, BTS2 → Mobilstation MT1...MT5" des Übertragungskanals TRC der Mobilstation MT1...MT5" des Übertragungskanals TRC der Mobilstation MT1...MT5, z.B. pro Zeitschlitz, mehr als ein CDMA-Code zugeteilt wird, während der Mobilstation MT1...MT5 in der Aufwärtsstrecke (uplink) "Mobilstation MT1...MT5 → Basisstation BTS1, BTS2" des Übertragungskanals TRC mehrere Zeitschlitze, z.B. jeweils maximal 1 CDMA-Code pro Zeitschlitz, zugeteilt wird.

## Patentansprüche

1. Verfahren zur drahtlosen Telekommunikation, insbesondere mit einer CDMA-, FDMA- und TDMA-Vielfachzugriffskomponente, bei dem
(a) Frequenzen von vorgegebenen Frequenzbändern jeweils in eine Vielzahl von Zeitschlitzen (ZS1...ZS8) mit jeweils einer vorgegebenen Zeitschlitzdauer (ZSD) unterteilt werden,
(b) in den Frequenzbändern jeweils Telekommunikationsverbindungen von einer vorgegebenen Anzahl von Telekommunikationsteilnehmern (TKT1...TKT8) gleichzeitig hergestellt werden, wobei dabei uni- oder bidirektional, in einer Aufwärtsverbindung und/oder einer Abwärtsverbindung, übertragene Teilnehmersignale zur Separierbarkeit mit jeweils einem individuell zugeordneten Code verknüpft werden,
(c) dem jeweiligen Telekommunikationsteilnehmer (TKT1...TKT8) mehrere Zeitschlitze (ZS1...ZS8) und/oder mehrere Codes zugeteilt werden,
(d) dem Telekommunikationsteilnehmer (TKT1...TKT8) bei der Abwärtsverbindung mehrere Codes zugeteilt werden,
(e) dem Telekommunikationsteilnehmer (TKT1...TKT8) bei der Aufwärtsverbindung mehrere Zeitschlitze (ZS2...ZS8) zugeteilt werden,
**dadurch gekennzeichnet, daß**
(f) dem Telekommunikationsteilnehmer (TKT1...TKT8) bei der Aufwärtsverbindung jeweils maximal 1 Code pro Zeitschlitz (ZS1...ZS8) zugeteilt wird,
(g) dem Telekommunikationsteilnehmer (TKT1...TKT8) bei der Abwärtsverbindung pro Zeitschlitz (ZS1...ZS8) mehr als ein Code zugeteilt wird.

2. Verfahren nach Anspruch 1, **dadurch gekennzeichnet, daß**
die Frequenzen des Frequenzbandes jeweils in acht Zeitschlitze (ZS1...ZS8) mit jeweils einer vorgegebenen Zeitschlitzdauer (ZSD) von etwa 577 µs unterteilt werden.

3. Verfahren nach Anspruch 1 oder 2, **dadurch gekennzeichnet, daß**
in dem Frequenzband Telekommunikationsverbindungen von im wesentlichen acht Telekommunikationsteilnehmern (TKT1...TKT8) gleichzeitig hergestellt werden.

## Claims

1. Method for wire-free telecommunication, in particular having a CDMA, FDMA and TDMA multiple access component in which
(a) frequencies in predetermined frequency bands are in each case subdivided into a large number of timeslots (ZS1...ZS8) each having a predetermined timeslot duration (ZSD),
(b) telecommunications connections are set up at the same time by a predetermined number of telecommunications subscribers (TKT1...TKT8) in each of the frequency bands, wherein, in this case, subscriber signals which are transmitted unidirectionally or bidirectionally in an uplink connection and/or a downlink connection are linked, in order to be able to separate them, to in each case one individually assigned code,
(c) a plurality of timeslots (ZS1...ZS8) and/or a plurality of codes can be assigned to the respective telecommunications subscriber (TKT1...TKT8),
(d) a plurality of codes are assigned to the telecommunications subscriber (TKT1...TKT8) for the downlink connection,
(e) a plurality of timeslots (ZS1...ZS8) are assigned to the telecommunications subscriber (TKT1...TKT8) for the uplink connection,
**characterized in that**
(f) a maximum of 1 code per timeslot (ZS1...ZS8) is assigned to each telecommunications subscriber (TKT1...TKT8) for the uplink connection,
(g) more than one code per timeslot (ZS1...ZS8) is assigned to the telecommunications subscriber (TKT1...TKT8) for the downlink connection.

2. Method according to Claim 1, **characterized in that**
the frequencies in the frequency band are each subdivided into eight timeslots (ZS1...ZS8) each having a predetermined time slot duration (ZSD) of approximately 577 µs.

3. Method according to Claim 1 or 2, **characterized in that**
telecommunications connections can be set up simultaneously essentially by eight telecommunications subscribers (TKT1...TKT8) in the frequency band.

## Revendications

1. Procédé pour la télécommunication sans fil, en particulier avec une composante à accès multiples CDMA, FDMA et TDMA, dans lequel
(a) des fréquences de bandes de fréquences données sont respectivement subdivisées en un grand nombre de créneaux temporels (ZS1 ... ZS8) avec respectivement une durée de créneau temporel (ZSD) donnée,
(b) dans les bandes de fréquences, des liaisons de télécommunications sont respectivement établies simultanément par un nombre donné d'abonnés des télécommunications (TKT1 ... TKT8), des signaux d'abonnés transmis étant associés, pour la séparabilité, unidirectionnellement ou bidirectionnellement, dans une liaison montante et/ou dans une liaison descendante, avec respectivement un code affecté individuellement,
(c) plusieurs créneaux temporels (ZS1 ... ZS8) et/ou plusieurs codes sont attribués à l'abonné des télécommunications (TKT1 ... TKT8) respectif,
(d) plusieurs codes sont attribués à l'abonné des télécommunications (TKT1 ... TKT8) dans le cas de la liaison descendante,
(e) plusieurs créneaux temporels (ZS1 ... ZS8) sont attribués à l'abonné des télécommunications (TKT1 ... TKT8) dans le cas de la liaison montante,
**caractérisé en ce que**
(f) 1 code au maximum par créneau temporel (ZS1 ... ZS8) est respectivement attribué à l'abonné des télécommunications (TKT1 ... TKT8) dans le cas de la liaison montante,
(g) plus d'un code est attribué à l'abonné des télécommunications (TKT1 ... TKT8) par créneau temporel (ZS1 ... ZS8) dans le cas de la liaison descendante.

2. Procédé selon la revendication 1, **caractérisé en ce que** les fréquences de la bande de fréquences sont respectivement subdivisées en huit créneaux temporels (ZS1 ... ZS8) avec respectivement une durée de créneau temporel (ZSD) donnée, d'à peu près 577 µs.

3. Procédé selon la revendication 1 ou 2, **caractérisé en ce que**, dans la bande de fréquences, des liaisons de télécommunications sont établies simultanément par, pour l'essentiel, huit abonnés des télécommunications (TKT1 ... TKT8).
